(19) Europäisches Patentamt
European Patent Office
Office européen des brevets

(11) Numéro de publication : 0 340 098 B1

(12) # FASCICULE DE BREVET EUROPEEN

(45) Date de publication du fascicule du brevet : **22.03.95 Bulletin 95/12**

(51) Int. Cl.$^6$ : **H04N 9/78**

(21) Numéro de dépôt : **89401171.7**

(22) Date de dépôt : **25.04.89**

(54) **Dispositif de séparation de chrominance et de luminance et récepteur de télévision comportant un tel dispositif.**

(30) Priorité : **29.04.88 FR 8805792**

(43) Date de publication de la demande : **02.11.89 Bulletin 89/44**

(45) Mention de la délivrance du brevet : **22.03.95 Bulletin 95/12**

(84) Etats contractants désignés : **DE ES GB IT**

(56) Documents cités :
**GB-A- 2 016 239**
**US-A- 4 727 415**
**PATENT ABSTRACTS OF JAPAN, vol. 12, no. 221 (E-625)[3068], 23 juin 1988, page 86 E 625; & JP-A-63 15 587 (MATSUSHITA ELECTRIC IND. CO. LTD) 22-01-1988**
**PATENT ABSTRACTS OF JAPAN, vol. 8, no. 111 (E-246)[1548], 24 mai 1984, page 74 E 246; & JP-A-59 25 491 (HITACHI SEISAKUSHO K.K.) 09-02-1984**

(73) Titulaire : **LABORATOIRE EUROPEEN DE RECHERCHES ELECTRONIQUES AVANCEES**
**74, rue du Surmelin**
**F-75020 Paris (FR)**

(72) Inventeur : **Guillon, Jean-Claude THOMSON - CSF**
**SCPI**
**Cédex 67**
**F-92045 Paris La Défense (FR)**

(74) Mandataire : **Ruellan-Lemonnier, Brigitte et al**
**THOMSON CONSUMER ELECTRONICS**
**9 Place des Vosges**
**La Défence 10**
**F-92400 Courbevoie (FR)**

EP 0 340 098 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention se rapporte principalement à un dispositif de séparation de chrominance et de luminance et à un récepteur de télévision comportant un tel dispositif.

Plusieurs systèmes de codage de couleurs en transmission de télévision comme par exemple le NTSC et le PAL véhiculent des signaux de chrominance superposés aux signaux de luminance. Dans ces systèmes les deux composantes de la chrominance sont transmises en quadratures de phase sur une sous-porteuse du signal. Pour obtenir une image couleur acceptable il est donc impératif d'effecteur une séparation des signaux de luminance et de chrominance puis une séparation des composantes de chrominance entre elles. Dans les décodeurs PAL de type connu on suppose que les valeurs des signaux de chrominance sont les mêmes sur les lignes successives. Ainsi par une somme vectorielle sur deux lignes successives, par exemple en utilisant une ligne à retard, on arrive à obtenir une meilleure stabilité de couleurs. Toutefois, en procédant ainsi on réduit la résolution verticale de la finesse de couleurs. Cette réduction de la finesse du rendu de couleurs dans le sens vertical de l'image était considéré comme inhérente au système de codage et de décodage PAL.

Par exemple, dans "Les techniques de l'ingénieur", Système de télévision, Système de codage de couleurs, 4,3 systèmes de codage PAL, page E6401-7 colonne de droite, 5ème paragraphe, on peut lire que la limitation du rendu de la finesse des couleurs dans le sens vertical des images est un effet résultant de la compensation des variations de couleurs entre deux lignes. Cette limitation du rendu de la finesse est jugée peu importante.

D'autres dispositifs permettent de déterminer directement la composante luminance à partir de deux échantillons situés diagonalement sur deux lignes successives de l'image, tel le dispositif décrit dans l'abrégé du brevet japonais JP-A-59.25491.

Le dispositif objet de la présente invention permet d'améllorer la séparation des signaux de luminance et de chrominance dans le système PAL pour :

- éliminer (ou au moins diminuer) l'exploitation des signaux chrominance comme des signaux luminances
- éliminer (ou au moins diminuer) l'exploitation des signaux luminance comme des signaux chrominance
- améliorer la résolution spatiale du signal de luminance en isolant les composantes luminance mélangées aux composante chrominances.

On considère que le signal en un point est connu et constitué par la somme d'un signal de luminance et d'un signal de chrominance. L'objet de l'invention est d'améliorer la séparation de ces signaux en effectuant une estimation du signal de luminance.

Selon l'invention, un procédé de séparation du signal de luminance Y et du signal de chrominance C d'une image de télévision, ledit signal de chrominance étant constitué de deux composantes U et V, ledit procédé comportant une étape de calcul du signal de luminance, est caractérisé en ce qu'il consiste à estimer les valeurs de luminance de points disposés sur une diagonale de l'image, à estimer la variation de luminance le long de cette diagonale, à en déduire un coefficient de correction que l'on applique au calcul d'une estimation du signal en chaque point de l'image, et à soustraire la valeur ainsi calculée du signal mesuré en ce point pour obtenir la valeur de chrominance.

Selon l'invention, le procédé de séparation est caractérisé par le fait que l'émission de télévision est réalisée selon la norme PAL.

Selon l'invention, le dispositif de séparation du signal de luminance Y et du signal de chrominance C d'une image de télévision comporte :

- des moyens de filtrage du signal vidéo pour l'extraction de la chrominance et de la composante de luminance dans le spectre de chrominance,
- des moyens de calcul d'un coefficient de correction K déduit de la variation de la dite composante de luminance dans le spectre de chrominance le long d'une diagonale de l'image,
- des moyens de clacul d'une valeur estimée de la composante de luminance dans le spectre de chrominance en chaque point de l'image,
- des moyens de soustraction de la dite valeur estimée de la composante de luminance du signal correspondant au spectre de chromiance, de façon à obtenir la valeur de la chrominance en chaque point de l'image.

Selon l'invention, le procédé de séparation est caractérisé par le fait que la déterminantion de la variation de la luminance et/ou de la chrominance d'une ligne à une autre est effectuée à partir des valeurs des points adjacents.

Selon l'invention, le procédé de séparation est caractérisé par le fait que la détermination est effectuée à partir de points disposés diagonalement par rapport aux directions de balayages horizontales et verticales.

Selon l'invention, le procédé est caractérisé par le fait que les signaux U et V sont traités à partir des diagonales différentes, sensiblement orthogonales.

Selon l'invention, le procédé est caractérisé par le fait que le signaux U ( et respectivement V) sont traités à partir des diagonales présentant une alternance +U, -U, +U, ou -U, +U, -U (respectivement de V) sur les trois lignes adjacentes.

Selon l'invention, le procédé est caractérisé par le fait que la luminance est séparée par soustraction de la valeur déterminée de la chrominance du signal capté et/ou que la chrominance est séparée par la soustraction de la valeur déterminée de la luminance du signal capté.

Selon l'invention, le procédé est caractérisé par le fait que l'on effectue une estimation du signal S = Y+C au point P(a,b) de coordonnées (a,b) en utilisant les formules :

- pour le signal S aux points où V s'annule et où U passe par un minimum ou maximum

$$\hat{S}P(a,b) = KSP(a + 1,b - 1) + (1 - K)SP(a - 1,b + 1)$$

- pour le signal S aux points où U s'annule et où V passe par un minimum ou un maximum

$$\hat{S}P(a,b) = KSP(a + 1,b + 1) - (1 - K)SP(a - 1,b + 1)$$

où K est coefficient.

Selon l'invention, le procédé est caractérisé par le fait que pour les points où U est maximal ou minimal

$$K = (\hat{Y}P(a,b) - \hat{Y}P(a - 1,b + 1))/(\hat{Y}P(a + 1,b - 1) - \hat{Y}P(a - 1,b + 1))$$

et pour les points où V est maximal ou minimal

$$K = (\hat{Y}P(a,b) - \hat{Y}P(a - 1,b - 1))/(\hat{Y}P(a + 1,b + 1) - \hat{Y}P(a - 1,b - 1))$$

où YP (a,b) est la valeur estimée de la luminance au point P(a,b).

Selon l'invention, le procédé est caractérisé par le fait que

$$\hat{Y}P(a,b) = (SP(a,b - 1) + SP(a,b + 1))/2$$

où SP(a,b) est le signal au poit P(a,b).

Selon l'invention le dispositif est caractérisé par le fait qu'il est un dispositif de trantement numérique du signal.

Un récepteur de télévision conforme à l'invention met en oeuvre le procédé tel que défini ci-dessus.

l'invention sera mieux comprise au moyen de la description ci-après et des figures annexées données comme des exemples non limitatifs parmi lesquelles :

- la figure 1 est un schéma d'un dispositif de type connu ;
- la figure 2 est un schéma général d'un exemple de réalisation du dispositif selon la présente invention ;
- la figure 3 est un schéma explicatif ;
- la figure 4 est un schéma d'un détail de réalisation de la figure 2 ;
- la figure 5 est un schéma d'un dispositif susceptible d'être mis en oeuvre dans le récepteur de télévision selon la présente invention ;
- la figure 6 est un schéma d'un récepteur de télévision selon la présente invention.

Sur les figures 1 à 6, on a utilisé les mêmes références pour désigner les mêmes éléments.

Dans le système de codage couleurs on utilise un signal de luminance $Y = 0{,}30\ E'_R + 0{,}59\ E'_G + 0{,}11\ E'_B$.

$E'_R$ étant l'amplitude du signal rouge, $E'_G$ étant l'amplitude du signal vert et $E'_B$ étant l'amplitude du signal bleu. Le signal de luminance Y comporte l'information sur la luminosité des divers points de l'image.

Dans le codage PAL on utilise deux signaux de chrominance :

$$E'_U = 0{,}493\ (E'_B - E'_Y)$$

et

$$E'_V = 0{,}877\ (E'_R - E'_Y)$$

$$-U = E'_U \sin 2 \pi f t$$

$$+V = E'_V \cos 2 \pi f t \text{ sur la ligne } n$$

$$-V = -E'_V \cos 2 \pi f t \text{ sur la ligne } n + 1$$

f étant la fréquence de la sous-porteuse couleur.

Les signaux de chrominance U, V sont transmis sur une sous-porteuse unique, en quadrature de phase. Pour obtenir un décodage de couleurs selon le système PAL il est donc nécessaire de :

- séparer l'information de luminance Y des informations de chrominance U et V,
- séparer les informations U et V entre elles.

Sur la figure 1, on peut voir un dispositif perfectionné de séparation de la chrominance 6 et de la luminance 5 à partir d'un signal composite PAL. Le dispositif comporte une première ligne à retard 1 connectée d'une part à l'entrée d'une seconde ligne à retard 2 et, d'autre part à une première entrée plus d'un additionneur 3. D'autre part, l'entrée de la ligne à retard 1 est reliée à l'entrée moins d'un soustracteur 4. La sortie de la ligne

à retard 2 est reliée d'une part à la seconde entrée de l'additionneur 3 et d'autre part à l'entrée plus du soustracteur 4. Le soustracteur 4 délivre le signal de chrominance 6. L'additionneur 3 délivre le signal de luminance. Le retard introduit par les lignes à retard 1 et 2 est égal au temps de parcours d'une ligne de l'image, par exemple 64 μs.

A l'entrée de la première ligne à retard nous avons le signal (luminance Y et chrominance U + V) de la ligne n+1. A la sortie de la première ligne à retard nous avons le signal de la ligne n. A la sortie de la seconde ligne à retard nous avons le signal de la ligne n-1. Pour cette ligne il y a un décalage de phase par le signal chrominance de 180° avec la ligne n+1. Nous avons donc le signal luminance Y et chrominance -U et -V.

En fait, le signal 6 n'est pas fonction uniquement de la chrominance. Il comporte aussi une partie du signal de luminance. De même, le signal 5 ne comporte pas uniquement le signal de luminance, mais aussi une partie du signal de chrominance. Ainsi, les performances d'un récepteur de télévision sont affectées par une insuffisante séparation de la luminance et de la chrominance. Dans les dispositif de type connu on suppose que le signal chrominance varie peu pour des points correspondants de l'image sur des lignes successives. Cela n'est parfaitement vrai que pour des scènes ayant un contenu uniforme. Cela étant loin d'être le cas dans la réalité, des transitions verticales provoquent des imperfections de l'image. Pour que le système décrit figure 1 fonctionne correctement, il faut que les signaux de luminance et de chrominance ne varient pas d'une ligne à l'autre.

Pour obtenir les séparations que l'on désire dans un dispositif selon la présente invention on effectue une estimation de la variation de luminance d'une ligne à la ligne suivante et on tient compte de ces estimations pour effectuer la séparation de la luminance et de la chrominance ainsi que des composantes U et V du signal de chrominance.

Sur la figure 2, on peut voir un dispositif selon la présent invention travaillant sur un signal composite échantillonné en synchrone (en phase et en amplitude) avec la sous-porteuse chrominance.

Dans l'exemple de réalisation illustré sur la figure 2, on utilise un dispositif de calcul 8 permettant d'estimer un coefficient K de correction, fonction de la variation du signal entre deux lignes successives de l'image. Le dispositif de la figure 2 comporte une ligne à retard 1. La sortie 21 reliée à l'entrée d'une seconde ligne à retard 2. Avantageusement, la sortie 21 de la première ligne à retard est reliée par l'intermédiaire d'un filtre passe-bande 7 à l'entrée de la ligne à retard 2. Le dispositif 8 de calcul du coefficient K 8 comprend une entrée 14 reliée à l'entrée de la ligne à retard 2, une entrée 15 reliée à l'entrée 20 de la ligne à retard 1 et une entrée 16 reliée à la sortie de la ligne à retard 2. Le dispositif 8 de calcul du coefficient K 8 comprend une sortie 17 reliée à une première entrée d'un multiplieur 9, une sortie 18 reliée à une première entrée d'un multiplieur 10, une ligne 19 reliée d'une part à la seconde entrée du multiplieur 9, et d'autre part à l'entrée le circuit de calcul 12. Le circuit de calcul 12 calcule le terme 1 - K. La sortie du dispositif de calcul 12 est reliée à la seconde entrée du multiplieur 10. Les sortie des multiplieurs 9 et 10 sont reliées aux entrées d'un additionneur 11. La sortie de l'additionneur 11 est reliée à l'entrée moins d'un soustracteur 4. D'autre part, une sortie 22 du dispositif 8 de calcul de coefficient K 8 est reliée à l'entrée plus du soustracteur 4. D'autre part la sortie 21 de la ligne à retard 1 est reliée à un dispositif de synchronisation du signal 13. Le dispositif de synchronisation du signal 13 est par exemple un registre. La sortie du registre 13 est reliée à l'entrée plus d'un soustracteur 3. La sortie 6 du soustracteur 4 est reliée à l'entrée moins du soustracteur 3. Le soustracteur 3 délivre un signal 5 fonction de la luminance du signal. Le dispositif 6 représente les deux composantes de la chrominance du signal.

Il important de noter que les signaux 5 et 6 de la figure 2 sont parfaitement séparés contrairement aux signaux correspondants de la figure 1.

Le dispositif selon la présente invention utilise un échantillonnage synchrone de la sous-porteuse couleurs dont le principe et les notations sont expliqués sur la figure 3. Les convertisseurs analogiques-numériques ne sont pas illustrés sur la figure 2. Au point 20 nous sommes en présence d'un signal composite PAL échantillonné avec la fréquence exacte de la sous-porteuse couleurs.

Sur la figure 3, on peut voir quelques exemples de points de l'image. Les exemples de points de l'image sont notés P (a,b) a représentant le numéro de la ligne et b le numéro du point dans la ligne. La distance verticale entre deux points est égale à 1/287, 5 la hauteur de l'image car il y a 575 lignes actives par image. La distance horizontale entre deux points est égale 1/922 de la largeur de l'image car il y a 922 points actifs par ligne. Les points P (a,b) correspondent aux maxima ou aux minima des signaux U et V d'une sous-porteuse chrominance non modulée. Les signaux U et V étant émis en quadrature de phase quand un signal U et maximal ou minimal notés respectivement U et -U sur la figure 3, le signal V s'annule. De même quand le signal V est maximal ou minimal notés respectivement V et -V le signal U est nul. A ces instants précis correspondent aux points de la figure 3, les signaux U et V sont orthogonaux.

Dans le mesure où on effectue un échantillonnage synchrone de la sous-porteuse chrominance on arrive à séparer de façon simple U et V. Toutefois, ces signaux comportent une composante correspondant à la luminance.

Sur la figure 3, les notations ont tenu compte de l'inversion de phases opérées entre deux lignes successives du signal propre au codage PAL.

La valeur estimée de la chrominance est obtenue en soustrayant la valeur estimée de la luminance du signal mesuré. Soit S le signal composite reçu

$$S = Y + C \text{ avec } C = U + V \text{ (somme vectorielle).}$$

C est le signal chrominance. Faisons une estimation linéaire de $\hat{Y}P(n,i+3)$ valeur estimée de la luminance au point P(n, i+3).

$$YP(ni + 3) = (SP(n - 1,i + 3) + SP(n + 1,i + 3))/2$$
$$= (YP(n - 1,i + 3) + UP(n - 1,i + 3) + YP(n + 1,i + 3) + (-U) P(n + 1,i + 3))/2$$

Si

$$UP(n - 1,i + 3) = U(n + 1,i + 3) \text{ alors } \hat{Y}P(n,i + 3)$$
$$= (YP(n - 1,i + 3) + YP(n + 1,i + 3))/2$$

Dans l'exemple de réalisation du dispositif selon la présente invention on va déterminer séparément le coefficient K pour les points correspondants à un maximum ou un minimum du signal U et pour le point pour lequel nous sommes en présence d'un maximum ou d'un minimum du signal V. En effet, pour le signal U nous allons travailler sur les diagonales passant par exemple par les points P (n+1,i-1), P (n,i) et P (n-1,i+1) ; ou par les points P (n+1,i+1), P(n,i+2) et P (n-1,i+3) ainsi que les droites parallèles aux droites précitées passant par un point minimisant ou maximisant le fonction U. Par contre, pour le calcul du coefficient K pour lequel la fonction V est maximale ou minimale ou va utiliser des diagonales symétriques aux précédentes comme par exemple les diagonales passant par le point P (n-1,i) P (n,i+1) et P (n+1,i+2) ou la droite passant par le point P (n+1,i), P (n,i-1) et P (n-1,i-2). Pour ces ensembles de droite la valeur de la composante de couleur (B-Y) d'une porteuse non modulée est constante. La phase de la sous-porteuse varie de 180° entre deux lignes, ce qui donne une alternance +U, -U, +U ou +V, -V, +V.

Le calcul de K pour la composante V de la chrominance au point P(n,i+3) :

$$K = \hat{Y}P(n,i + 3) - \hat{Y}P(n - 1,i + 2)/(\hat{Y}P(n + 1,i + 4) - \hat{Y}P(n - 1,i + 2)).$$

valeur estimée de YP(n,i+3) =

$$\hat{Y}P(n,i + 3) = (SP(n,i + 2) + SP(n,i + 4))/2$$

SP(a,b) étant la valeur du signal échantillonné au point P(a,b).

Valaur moyenne de YP(n-i,i+2) =

$$\hat{Y}P(n - 1,i + 2) = (SP(n - 1,i + 1) + SP(n - 1,i + 3))/2.$$

La valeur moyenne de Y au point P(n+1,i+4) =

$$\hat{Y}P(n + 1,i + 4) = (SP(n + 1,i + 3) + SP(n + 1,i + 5))/2$$

et si

$$K = (\hat{Y}P(n,i + 3) - \hat{Y}P(n - 1,i + 2))/(\hat{Y}P(n + 1,i + 4) - \hat{Y}P(n - 1,i + 2).$$
$$= (SP(n,i + 4) - SP(n - 1,i + 1)) + (SP(n,i + 2) - SP(n - 1,i + 3))/(SP(n + 1,i + 5) - SP(n - 1,i + 1) +$$
$$SP(n + 1,i + 3) - SP(n - 1,i + 3)).$$

De même pour le point dans lequel la fonction U est maximale ou minimale

$$K = (\hat{Y}P(n,i + 2) - \hat{Y}P(n - 1,i + 3))/(\hat{Y}P(n + 1,i + 1) - \hat{Y}P(n - 1,i + 3))$$

Avec

$$\hat{Y}P(n,i + 2) = (SP(n,i + 3) + SP(n,i + 1))/2$$

$$\hat{Y}P(n - 1,i + 3) = (SP(n - 1,i + 4) + SP(n - 1,i + 2))/2$$

$$\hat{Y}P(n + 1,i + 1) = (SP(n + 1,i + 2) + SP(n + 1,i))/2$$

Une estimation du signal de luminance est seulement utilisée pour le calcul du coefficient K.

Par la suite, on calcule une estimation du signal au P(a,b).

On a donc

$$\hat{S}(a,b) = \widehat{Y(a,b) + C(a,b)}$$

Il faut noter que le signal de chrominance composant le signal S(a,b) est en opposition de phase par rapport

au signal de chrominance composant le signal S(a,b).

On peut donc avoir :

$$\hat{C}(a,b) = (S(a,b) - \hat{S}(a,b))/2$$

La luminance s'annule;

$$\hat{Y}(a,b) = (S(a,b) + \hat{S}(a,b))/2$$

La chrominance s'annule.

$$Y(a,b) = S(a,b) - \hat{C}(a,b)$$

Ainsi en un point quelconque de l'image P(a,b) il est possible d'estimer la valeur moyenne $\hat{S}P(a,b)$:

a) si le point P(a,b) correspond à un maximum de la fonction U

$$\hat{S}P(a,b) = KSP(a + 1,b - 1) + (1 - K) SP(a - 1,b + 1)$$

K étant la constante pour le point à valeur V nulle.

b) si le point P(a,b) correspond à un maximum ou un minimum de la fonction V

$$\hat{S}P(a,b) = KSP(a + 1,b + 1) - (1 - K) SP(a - 1,b - 1)$$

Avec K correspoondant aux valeurs nulles de U.

Pour chaque point P(a,b), le signal SP(a,b) est égal à la somme du signal de chrominance, CP(a,b) est du signal de luminance, YP(a,b). En connaissant ainsi une des données, il est possible par soustraction de déduire l'autre.

Sur la figure 4, on peut voir l'exemple de réalisation préféré du dispositif 8 de calcul de coefficient K. Le dispositif comporte une première entrée 15 reliée à un filtre passe-bande 23. La sortie du filtre passe-bande 23 est reliée d'une part à un multiplexeur 29 et d'autre part à l'entrée d'un premier dispositif de synchronisation 24. Les dispositifs de synchronisation par exemple 24 induisent un retard égal à la distance séparant deux points de l'image de la figure 3. Les dispositifs de synchronisation comme par exemple 24 sont par exemple des registres commandés par une horloge (non représentée sur la figure 4). La sortie du dispositif 24 est reliée d'une part à une première entrée du multiplexeur 28 et d'autre part à l'entrée d'un dispositif de synchronisation 25. La sortie du dispositif de synchronisation 25 est reliée d'une part à une entrée d'un additionneur 39 et d'autre part à l'entrée d'un dispositif de synchronisation 26. La sortie du dispositif de synchronisation 26 est reliée d'une part à la seconde entrée du multiplexeur 28 et d'autre part à l'entrée du dispositif de synchronisation 27. La sortie du dispositif de synchronisation 27 est reliée à la seconde entrée du multiplexeur 29. La sortie du multiplexeur 28 est reliée à une sortie 17. La sortie du multiplexeur 29 est reliée à la seconde entrée de l'additionneur 39.

Une entrée 14 du dispositif 8 est reliée à l'entrée d'un dispositif de synchronisation 30 et à une première entrée d'un additionneur 41. La sortie du dispositif de synchronisation 30 est reliée à l'entrée d'un dispositif de synchronisation 31. Dans une variante de réalisation du dispositif selon la présente invention, la sortie du dispositif de synchronisation 30 est reliée à une sortie 22 pour obtenir la bonne synchronisation à l'extérieur du circuit 8. Il est toutefois possible d'utiliser un dispositif de synchronisation extérieur comme par exemple un registre pour obtenir la synchronisation désirée. La sortie du dispositif de synchronisation 31 est reliée à la seconde entrée de l'additionneur 41. La sortie de l'additionneur 41 est reliée à l'entrée plus d'un soustracteur 43.

Une entrée 16 du dispositif 8 est reliée d'une part au dispositif de synchronisation 32 et d'autre part à une première entrée d'un multiplexeur 37. La sortie du dispositif de synchronisation 32 est reliée d'une part à une première entrée du multiplexeur 36 et d'autre part à l'entrée du dispositif de synchronisation 33. La sortie du dispositif de synchronisation 33 est reliée d'une part à une première entrée d'un additionneur 42 et d'autre part à l'entrée du dispositif de synchronisation 34. La sortie du dispositif de synchronisation 34 est reliée d'une part à la seconde entrée du multiplexeur 36 et d'autre part à l'entrée du dispositif de synchronisation 35. La sortie du dispositif de synchronisation 35 est reliée à la seconde entrée du multiplexeur 37. La sortie du multiplexeur 37 est reliée à une seconde entrée de l'additionneur 42. La sortie de l'additionneur 42 est reliée d'une part à l'entrée moins du soustracteur 40 et d'autre part à l'entrée moins du soustracteur 43. La sortie du soustracteur 43 est reliée à une première entrée du diviseur 44. La sortie du soustracteur 40 est reliée à une seconde entrée du diviseur 44. Le diviseur 44 effectue la division du résultat fourni par le soustracteur 43 par le résultat fourni par le soustracteur 40. La sortie du diviseur 44 est reliée à la sortie 19 du dispositif 8. La sortie du multiplexeur 36 est reliée à la sortie 18 du dispositif 8.

Les multiplexeurs 28,29,36 et 37 reçoivent un signal de commande 38 qui permet de passer du calcul de coefficient K pour les points correspondant à la valeur minimale ou maximale de V au calcul de U pour les points correspondants à la valeur minimale ou maximale de U. Le signal de commande 38 permettant la commutation des multiplexeurs 28,29,36 et 37 est élaboré à partir du dispositif de la figure 5. Il est bien entendu

possible de réaliser d'autres circuits assurant la séparation des composants selon la présente invention. Par exemple il est possible de réaliser un circuit effectuant les calculs pour les points de l'image illustrés sur la figure 3 correspondant à la valeur maximale ou minimale de la composante U et un circuit séparé effectuant le calcul pour les points correspondant à la valeur minimale ou maximale de la composante V de la chrominance. Dans un tel cas on utilise un multiplexeur permettant de sélectionner la valeur calculée par le premier ou le second circuit.

Le filtre passe-bande 7 de la figure 2 et le filtre passe-bande 23 de la figure 4 permettent de séparer la luminance basse fréquence et la chrominance plus la luminance haute fréquence.

Dans les signaux de télévision PAL, les points correspondant dans une trame au signal minimal et maximal de U ou de V sont prédéterminés.

Sur la figure 5, on peut voir un circuit permettant l'élaboration de la synchronisation de calcul en fonction des points maximisant ou minimisant U. Le dispositif de sélection de salve 45 reçoit le signal vidéo composite PAL. Il est connecté à l'entrée d'un comparateur de phase 47. La sortie du comparateur de phase 47 est reliée à un filtre passe-bas 48. La sortie du filtre passe-bas 48 est reliée à l'entrée d'un oscillateur commandé par une tension (VCO en terminologie anglosaxonne) comportant un quartz 50. La sortie de l'oscillateur 49 est reliée d'une part à un amplificateur 52 et d'autre part à un diviseur 51. La sortie du diviseur 51 est reliée à la seconde entrée du comparateur de phase 47. La sortie de l'amplificateur 52 comporte le signal d'horloge 53 permettant la commutation. Le sélecteur de salve 45 permet de détecter qu'on est en présence du signal de synchronisation du standard PAL. Le diviseur 51 effectue une division par quatre.

Sur la figure 6, on peut voir un exemple de réalisation d'un récepteur de télévision selon la présente invention. Le récepteur comporte un tuner à fréquences intermédiaires 55 recevant le signal d'une antenne 54 d'un dispositif de commande 62. Le tuner fréquence intermédiaire 55 est relié d'une part à un dispositif de traitement de son 56, à un dispositif de séparation chrominance luminance et de démodulation de la chrominance 59 ainsi qu'à un dispositif de séparation de synchronisation 63.

Le dispositif de traitement du son 56 est relié à un amplificateur 57. L'amplificateur 57 est relié à un haut-parleur 58.

Le dispositif de séparation de chrominance luminance de démodulation de la chrominance 59 représente l'originalité du téléviseur selon le présente invention. Il fournit à une matrice 60 de commande de canons à électrons fournissant les couleurs rouges, bleus et verts les signaux de commande de luminance Y, R-Y correspondant au signal rouge moins le signal de luminance et le signal B-Y correspondant au signal bleu moins le signal de luminance. La matrice 60 fournit à un tube à rayons cathodiques 61 les signaux de commande rouges, bleus et verts.

Le dispositif de séparation de synchronisation 63 fournit le signal de synchronisation verticale à un amplificateur de synchronisation verticale 64 et synchronisation horizontale à un amplificateur de synchronisation horizontale 65. L'amplificateur de synchronisation verticale fournit les signaux de synchronisation verticale au tube à rayons cathodiques 61. L'amplificateur 65 fournit des signaux de synchronisation horizontale au tube à rayons cathodiques 61. Le dispositif 66 fournit la très haute tension (THT) nécessaire au fonctionnement du tube à rayons cathodiques 61.

Le dispositif 8 de la figure 2 et 4 est par exemple réalisé sous forme d'un circuit intégré.

Le dispositif selon la présente invention s'applique notamment à la réalisation d'un récepteur de télévision. L'invention s'applique aussi à la réalisation de récepteurs de télévision aux normes PAL.

## Revendications

1. Procédé de séparation du signal de luminance Y et du signal de chrominance C d'une image de télévision, ledit signal de chrominance étant constitué de deux composantes U et V, ledit procédé comportant une étape de calcul du signal de luminance, est caractérisé en ce qu'il consiste à estimer les valeurs de luminance de points disposés sur une diagonale de l'image, à estimer la variation de luminance le long de cette diagonale, à en déduire un coefficient de correction que l'on applique au calcul d'une estimation du signal en chaque point de l'image, et à soustraire la valeur ainsi calculée du signal mesuré en ce point pour obtenir la valeur de chrominance.

2. Procédé selon la revendication 1, caractérisé par le fait que l'émission de télévision est réalisée selon la norme PAL.

3. Procédé selon la revendication 1 ou 2, caractérisé par le fait que les signaux U et V sont traités à partir de diagonales différentes, sensiblement orthogonales.

4. Procédé selon l'une quelconque des revendications précédentes, caractérisé par le fait que les signaux U (et respectivement V) sont traités à partir des diagonales présentant une alternance +U, -U, +U ou -U, +U, -U (respectivement de V) sur les trois lignes adjacentes.

5. Procédé selon l'une quelconque des revendications précédentes, caractérisé par le fait que l'on effectue une estimation du signal S = Y +C au point P(a,b) de coordonnée (a,b) en utilisant les formules :
   - pour le signal S aux points où V s'annule et où U passe par un minimum ou maximum
     $$\hat{S}P(a,b) = KSP(a+1,b-1) + (1-K)SP(a-1,b+1)$$
   - pour le signal S aux points où U s'annule et où V passe par un maximum ou un minimum
     $$\hat{S}P(a,b) = KSP(a+1,b+1) - (1-K)SP(a-1,b-1)$$

   où K est un coefficient.

6. Procédé selon la revendication 5, caractérisé en ce que, pour les points où U est maximal ou minimal
   $$K = (\hat{Y}P(a,b) - \hat{Y}P(a-1,b+1))/(\hat{Y}P(a+1,b-1) - \hat{Y}P(a-1,b+1))$$
   et pour les points où V est maximal ou minimal,
   $$K = (\hat{Y}P(a,b) - \hat{Y}P(a-1,b-1))/(\hat{Y}P(a+1,b+1) - \hat{Y}P(a-1,b-1))$$
   où $\hat{Y}P(a,b)$ est la valeur estimée de la luminance au point P(a,b).

7. Procédé selon la revendication 6, caractérisé par le fait que
   $$\hat{Y}P(a,b) = (SP(a,b-1) + SP(a,b+1))/2$$
   où SP(a,b) est le signal au point P(a,b).

8. Dispositif de séparation du signal de luminance Y et du signal de chrominance C d'une image de télévision caractérisé en ce qu'il comporte :
   - des moyens de filtrage (7,23) du signal vidéo pour l'extraction de la chrominance et de la composante de luminance dans le spectre de chrominance,
   - des moyens de calcul (8, 14 à 44) d'un coefficient de correction (K) déduit de la variation de la dite composante de luminance dans le spectre de chrominance le long d'une diagonale de l'image,
   - des moyens de calcul (1 à 22) d'une valeur estimée de la composante de luminance dans le spectre de chrominance en chaque point de l'image,
   - des moyens de soustraction (4) de la dite valeur estimée de la composante de luminance du signal correspondant au spectre de chrominance, de façon à obtenir la valeur de la chrominance en chaque point de l'image (6).

9. Dispositif selon la revendication 8, caractérisé en ce qu'il comporte des moyens de soustraction (3) du signal de chrominance (5) du signal vidéo pour obtenir la valeur de la luminance en chaque point de l'image (5).

10. Dispositif selon l'une des revendications 8 ou 9, caractérisé en ce que les moyens de filtrage comportent des filtres passe-bande (7,23).

11. Dispositif selon l'une des revendications 8 à 10, caractérisé en ce qu'il comprend des moyens (45-53) d'échantillonnage synchronisés en amplitude et en phase avec la sous-porteuse chrominance , pour l'obtention dun échantillon pour chaque minimum et maximum des composantes chrominance (U,V).

12. Dispositif selon l'une des revendications 8 à 11, caractérisé en ce que les moyens de calcul du coefficient de correction (K) comportent des moyens de mémorisation des lignes n-1, n et n+1 lorsque le point de l'image pour lequel on détermine la luminance et la chrominance est sur la ligne n.

13. Dispositif selon l'une des revendications 8 à 12, caractérisé en ce que, lorsque le signal de chrominance U passe par un maximum ou un minimum, les moyens de calcul du coefficient de correction (K) calculent le dit coefficient de façon à ce que :
    $$K = \frac{SP(a,b-1) + SP(a,b+1) - SP(a-1,b) - SP(a-1,b+2)}{SP(a+1,b-2) + SP(a+1,b) - SP(a-1,b) - SP(a-1,b+2)}$$
    où SP(a,b) est le signal au point P(a,b).

14. Dispositif selon l'une des revendications 8 à 13, caractérisé en ce que, lorsque le signal de chrominance V passe par un maximum ou un minimum, les moyens de calcul du coefficient de correction (K) calculent le dit coefficient de façon à ce que :

$$K = \frac{SP(a,b-1) + SP(a,b+1) - SP(a-1,b-2) - SP(a-1,b)}{SP(a+1,b) + SP(a+1,b+2) - SP(a-1,b-2) - SP(a-1,b)}$$

où SP(a,b) est le signal au point P(a,b).

**15.** Récepteur de télévision caractérisé en ce qu'il comporte un dispositif selon l'une des revendications 8 à 14.

**16.** Récepteur de télévision, caractérisé en ce qu'il met en oeuvre le procédé selon l'une des revendications 1 à 7.

## Patentansprüche

**1.** Verfahren zur Trennung des Luminanzsignals Y und des Chrominanzsignals C eines Fernsehbildes, wobei das Chrominanz-signal von zwei Komponenten U und V gebildet ist und wobei das Verfahren einen Schritt zur Berechnung des Luminanzsignals umfaßt, dadurch gekennzeichnet, daß es darin besteht, daß die Luminanzwerte von Punkten geschätzt werden, die auf einer Diagonale des Bildes liegen, daß die Luminanzänderung entlang dieser Diagonale geschätzt wird, daß daraus ein Korrekturkoeffizient abgeleitet wird, der auf die Berechnung eines Schätzwerts des Signals an jedem Punkt des Bildes angewendet wird, und daß der auf diese Weise berechnete Wert von dem an diesem Punkt gemessenen Signal subtrahiert wird, um den Chrominanzwert zu erhalten.

**2.** Verfahren nach Anspruch 1, dadurch gekennzeichnet, daß die Fernsehsendung in der PAL-Norm erfolgt.

**3.** Verfahren nach Anspruch 1 oder 2, dadurch gekennzeichnet, daß die Signale U und V ausgehend von verschiedenen, im wesentlichen zueinander senkrechten Diagonalen verarbeitet werden.

**4.** Verfahren nach einem der vorhergehenden Ansprüche, dadurch gekennzeichnet, daß die Signale U (bzw. V) ausgehend von Diagonalen verarbeitet werden, die eine Wechselfolge +U, -U, +U oder -U, +U, -U (bzw. von V) auf den drei benachbarten Zeilen aufweisen.

**5.** Verfahren nach einem der vorhergehenden Ansprüche, dadurch gekennzeichnet, daß eine Schätzung des Signals S = Y + C am Punkt P(a,b) der Koordinaten (a,b) unter Anwendung der folgenden Formeln durchgeführt wird:

- für das Signal S an den Punkten, an denen V zu Null wird und U durch ein Minimum oder ein Maximum geht,

$$\hat{S}P(a,b) = KSP(a+1,b-1) + (1-K)SP(a-1,b+1)$$

- für das Signal S an den Punkten, an denen U zu Null wird und durch V durch ein Maximum oder ein Minimum geht,

$$S\hat{P}(a,b) = KSP(a+1,b+1) - (1-K)SP(a-1,b-1)$$

worin K ein Koeffizient ist.

**6.** Verfahren nach Anspruch 5, dadurch gekennzeichnet, daß für die Punkte, an denen U maximal oder minimal ist,

$$K = (\hat{Y}P(a,b) - \hat{Y}P(a-1,b+1)) / (\hat{Y}P(a+1,b-1) - \hat{Y}P(a-1,b+1))$$

und für die Punkte, an denen V maximal oder minimal ist,

$$K = (\hat{Y}P(a,b) - \hat{Y}P(a-1,b-1)) / (\hat{Y}P(a+1,b+1) - \hat{Y}P(a-1,b-1))$$

worin $\hat{Y}P(a,b)$ der Schätzwert der Luminanz an dem Punkt P(a,b) ist.

**7.** Verfahren nach Anspruch 6, dadurch gekennzeichnet, daß

$$\hat{Y}P(a,b) = (SP(a,b-1) + SP(a,b+1))/2$$

worin SP(a,b) das Signal am Punkt P(a,b) ist.

**8.** Anordnung zur Trennung des Luminanzsignals Y und des Chrominanzsignals C eines Fernsehbildes, dadurch gekennzeichnet,daß sie enthält:

- Filtermittel (7, 23) zur Filterung des Videosignals für die Extraktion der Chrominanz und der Luminanzkomponente in dem Chrominanzspektrum,
- Rechenmittel (8, 14 bis 44) zur Berechnung eines Korrekturkoeffizienten (K), der von der Änderung der Luminanzkomponente in dem Chrominanzspektrum entlang einer Bilddiagonale abgeleitet ist,

- Rechenmittel (1 bis 22) zur Berechnung eines Schätzwertes der Luminanzkomponente in dem Chrominanzspektrum an jedem Bildpunkt,
- Subtraktionsmittel (4) zur Subtraktion des Schätzwertes der Luminanzkomponente von dem dem Chrominanzspektrum entsprechenden Signal in der Weise, daß der Chrominanzwert an jedem Bildpunkt (6) erhalten wird.

**9.** Anordnung nach Anspruch 8, dadurch gekennzeichnet, daß sie Subtraktionsmittel (3) zur Subtraktion des Chrominanzsignals (5) von dem Videosignal enthält, damit der Wert der Luminanz an jedem Bildpunkt (5) erhalten wird.

**10.** Anordnung nach einem der Ansprüche 8 oder 9, dadurch gekennzeichnet, daß die Filtermittel Bandpaßfilter (7, 23) enthalten.

**11.** Anordnung nach einem der Ansprüche 8 bis 10, dadurch gekennzeichnet, daß sie Abtastmittel (45-53) enthält, die nach Amplitude und Phase mit dem Chrominanz-Unterträger synchronisiert sind, damit für jedes Minimum und Maximum der Chrominanz-Komponenten (U, V) ein Abtastwert erhalten wird.

**12.** Anordnung nach einem der Ansprüche 8 bis 11, dadurch gekennzeichnet, daß die Rechenmittel für die Berechnung des Korrekturkoeffizienten (K) Speichermittel enthalten, welche die Zeilen n-1, n und n+1 speichern, wenn der Bildpunkt, für den die Luminanz und die Chrominanz bestimmt werden, auf der Zeile n liegt.

**13.** Anordnung nach einem der Ansprüche 8 bis 12, dadurch gekennzeichnet, daß dann, wenn das Chrominanzsignal U durch ein Maximum oder ein Minimum geht, die Rechenmittel für den Korrekturkoeffizienten (K) diesen Koeffizienten derart berechnen, daß gilt:

$$K = \frac{SP(a,b-1) + SP(a,b+1) - SP(a-1,b) - SP(a-1,b+2)}{SP(a+1,b-2) + SP(a+1,b) - SP(a-1,b) - SP(a-1,b+2)}$$

worin SP(a,b) das Signal am Punkt P(a,b) ist.

**14.** Anordnung nach einem der Ansprüche 8 bis 13, dadurch gekennzeichnet, daß dann, wenn das Chrominanzsignal V durch ein Maximum oder ein Minimum geht, die Rechenmittel für die Berechnung des Korrekturkoeffizienten (K) diesen Koeffizienten derart berechnen, daß gilt:

$$K = \frac{SP(a,b-1) + SP(a,b+1) - SP(a-1,b-2) - SP(a-1,b)}{SP(a+1,b) + SP(a+1,b+2) - SP(a-1,b-2) - SP(a-1,b)}$$

worin SP(a,b) das Signal am Punkt P(a,b) ist.

**15.** Fernsehempfänger, dadurch gekennzeichnet, daß er eine Anordnung nach einem der Ansprüche 8 bis 14 enthält.

**16.** Fernsehempfänger, dadurch gekennzeichnet, daß er das Verfahren nach einem der Ansprüche 1 bis 7 anwendet.

## Claims

**1.** Method of separating the luminance signal Y and the chrominance signal C of a television image, the said chrominance signal consisting of two components U and V, the said method including a step of calculating the luminance signal, is characterized in that it consists in estimating the luminance values of points arranged on a diagonal of the image, in estimating the luminance variation along this diagonal, in deducing a correction coefficient therefrom which is applied to the calculation of an estimate of the signal at each point of the image, and in subtracting the value thus calculated from the signal measured at this point in order to obtain the chrominance value.

**2.** Method according to Claim 1, characterized in that the television transmission is carried out according to the PAL standard.

**3.** Method according to Claim 1 or 2, characterized in that the U and V signals are processed on the basis of different, substantially orthogonal diagonals.

**4.** Method according to any one of the preceding claims, characterized in that the U (and V respectively)

signals are processed on the basis of diagonals exhibiting an alternating sequence +U, -U, +U or -U, +U, -U (V respectively) over the three adjacent lines.

5. Method according to any one of the preceding claims, characterized in that an estimate is made of the signal S = Y +C at the point P(a,b) with coordinates (a,b) by using the formulae:
   - for the signal S at the points where V cancels out and where U passes through a minimum or maximum
   $$\hat{S}P(a,b) = KSP(a+1,b-1) + (1-K)SP(a-1,b+1)$$
   - for the signal S at the points where U cancels out and where V passes through a maximum or a minimum
   $$S\hat{P}(a,b) = KSP(a+1,b+1) - (1-K)SP(a-1,b-1)$$

   where K is a coefficient.

6. Method according to Claim 5, characterized in that, for the points where U is a maximum or a minimum
   $$K = (\hat{Y}P(a,b) - \hat{Y}P(a-1,b+1))/(\hat{Y}P(a+1,b+1) - \hat{Y}P(a-1,b+1))$$
   and for the points where V is a maximum or a minimum,
   $$K = (\hat{Y}P(a,b) - \hat{Y}P(a-1,b-1))/(\hat{Y}P(a+1,b+1) - \hat{Y}P(a-1,b-1))$$
   where $\hat{Y}P(a,b)$ is the estimated value of the luminance at the point P(a,b).

7. Method according to Claim 6, characterized in that
   $$\hat{Y}P(a,b) = (SP(a,b-1) + SP(a,b+1))/2$$
   where SP(a,b) is the signal at the point P(a,b).

8. Device for separating the luminance signal Y and the chrominance signal C of a television image, characterized in that it includes:
   - means (7, 23) of filtering the video signal for extracting the chrominance and the luminance component in the chrominance spectrum,
   - means (8, 14 to 44) for calculating a correction coefficient (K) deduced from the variation of the said luminance component in the chrominance spectrum along a diagonal of the image,
   - means (1 to 22) of calculating an estimated value of the luminance component in the chrominance spectrum at each point of the image,
   - means (4) of subtracting the said estimated value of the luminance component from the signal corresponding to the chrominance spectrum, so as to obtain the value of the chrominance at each point of the image (6).

9. Device according to Claim 8, characterized in that it includes means (3) of subtracting the chrominance signal (5) from the video signal in order to obtain the value of the luminance at each point of the image (5).

10. Device according to one of Claims 8 or 9, characterized in that the filtering means include bandpass filters (7, 23).

11. Device according to one of Claims 8 to 10, characterized in that it includes sampling means (45-53) synchronized in amplitude and in phase with the chrominance subcarrier, for obtaining a sample for each minimum and maximum of the chrominance components (U, V).

12. Device according to one of Claims 8 to 11, characterized in that the means of calculating the correction coefficient (K) include means of storing lines n-1, n and n+1 in memory, when the point of the image for which the luminance and the chrominance are determined is on the line n.

13. Device according to one of Claims 8 to 12, characterized in that, when the chrominance signal U passes through a maximum or a minimum, the means of calculating the correction coefficient (K) calculate the said coefficient in such a way that:
    $$K = \frac{SP(a,b-1) + SP(a,b+1) - SP(a-1,b) - SP(a-1,b+2)}{SP(a+1,b-2) + SP(a+1,b) - SP(a-1,b) - SP(a-1,b+2)}$$
    where SP(a,b) is the signal at the point P(a,b).

14. Device according to one of Claims 8 to 13, characterized in that, when the chrominance signal V passes through a maximum or a minimum, the means of calculating the correction coefficient (K) calculate the

said coefficient in such a way that:

$$K = \frac{SP(a,b-1) + SP(a,b+1) - SP(a-1,b-2) - SP(a-1,b)}{SP(a+1,b) + SP(a+1,b+2) - SP(a-1,b-2) - SP(a-1,b)}$$

where SP(a,b) is the signal at the point P(a,b).

**15.** Television receiver characterized in that it includes a device according to one of Claims 8 to 14.

**16.** Television receiver, characterized in that it implements the method according to one of Claims 1 to 7.

FIG. 1

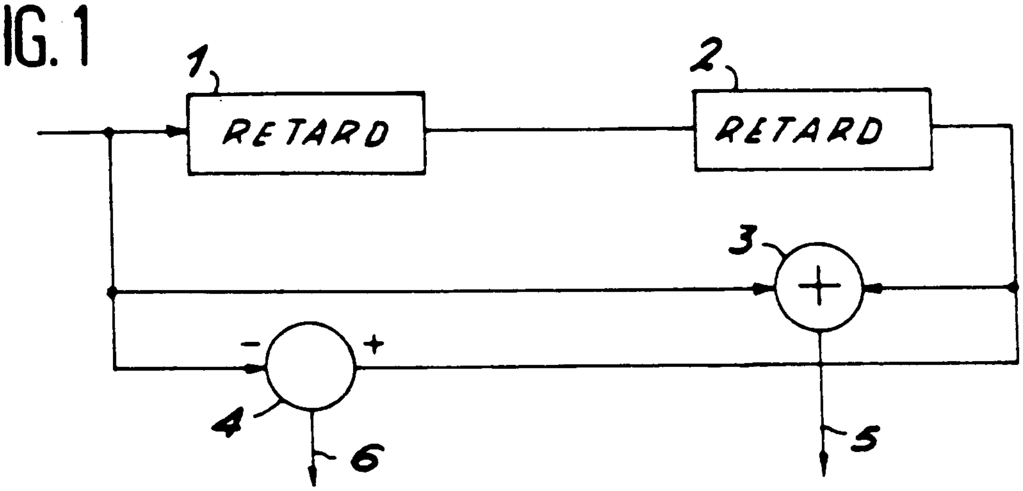
1
RETARD
2
RETARD
3
-
+
4
6
5

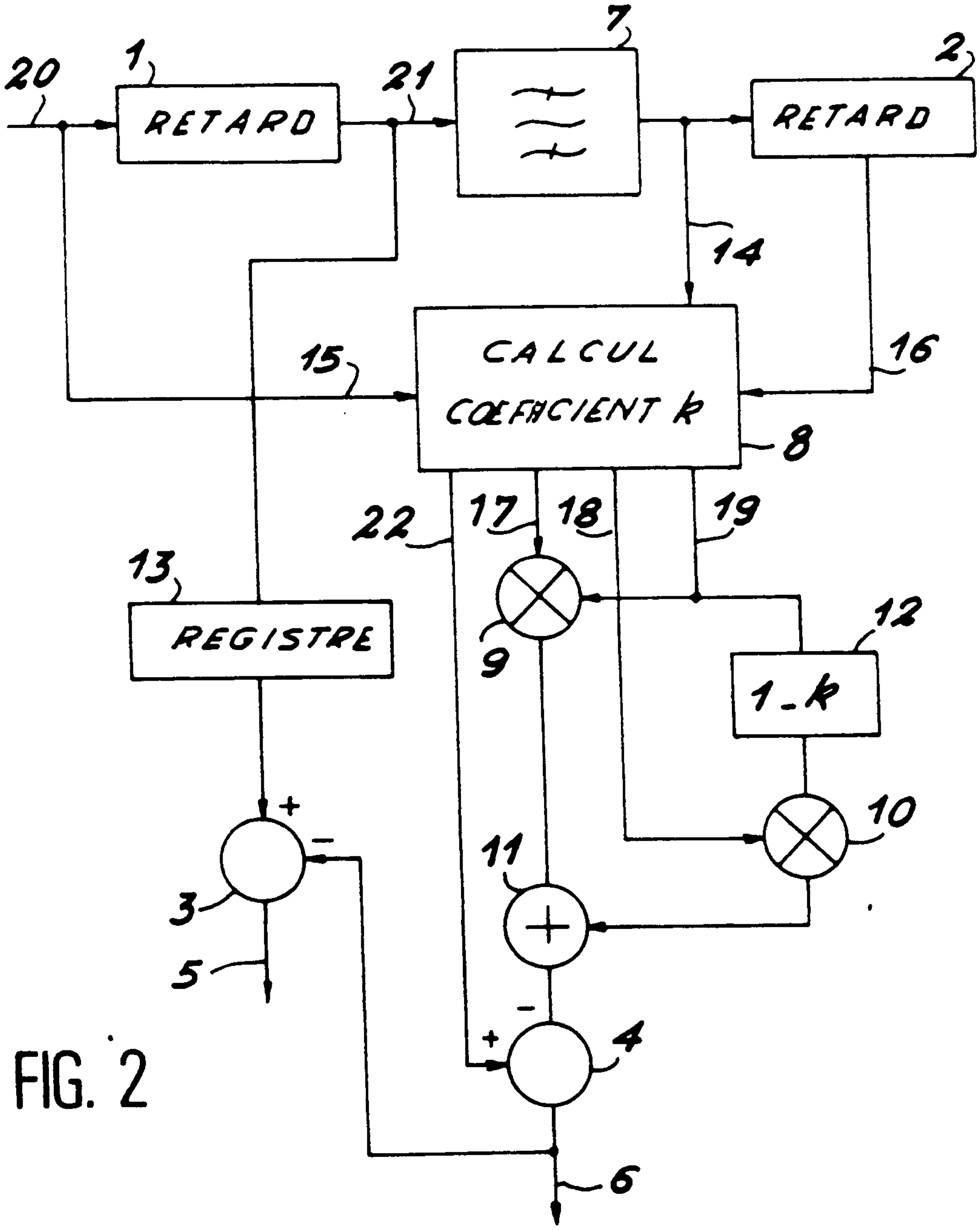
20
1
RETARD
21
7
2
RETARD
14
CALCUL
COEFFICIENT k
15
16
8
22
17
18
19
13
REGISTRE
9
12
1-k
+
-
3
5
10
11
-
+
4
6

FIG. 2

FIG. 3

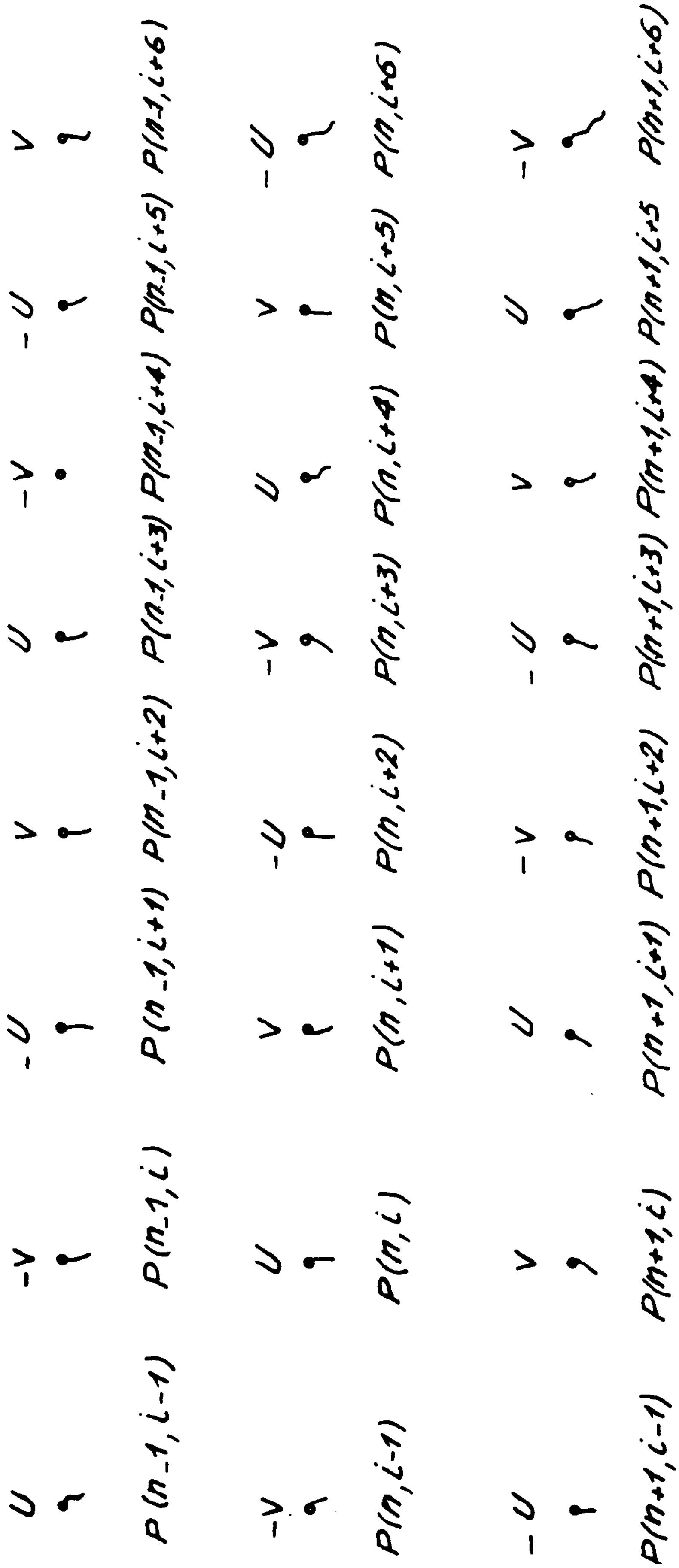
U
-V
-U
V
U
-V
-U
V
P(n-1, i-1)
P(n-1, i)
P(n-1, i+1)
P(n-1, i+2)
P(n-1, i+3)
P(n-1, i+4)
P(n-1, i+5)
P(n-1, i+6)
-V
U
V
-U
-V
U
V
-U
P(n, i-1)
P(n, i)
P(n, i+1)
P(n, i+2)
P(n, i+3)
P(n, i+4)
P(n, i+5)
P(n, i+6)
-U
V
U
-V
-U
V
U
-V
P(n+1, i-1)
P(n+1, i)
P(n+1, i+1)
P(n+1, i+2)
P(n+1, i+3)
P(n+1, i+4)
P(n+1, i+5
P(n+1, i+6)

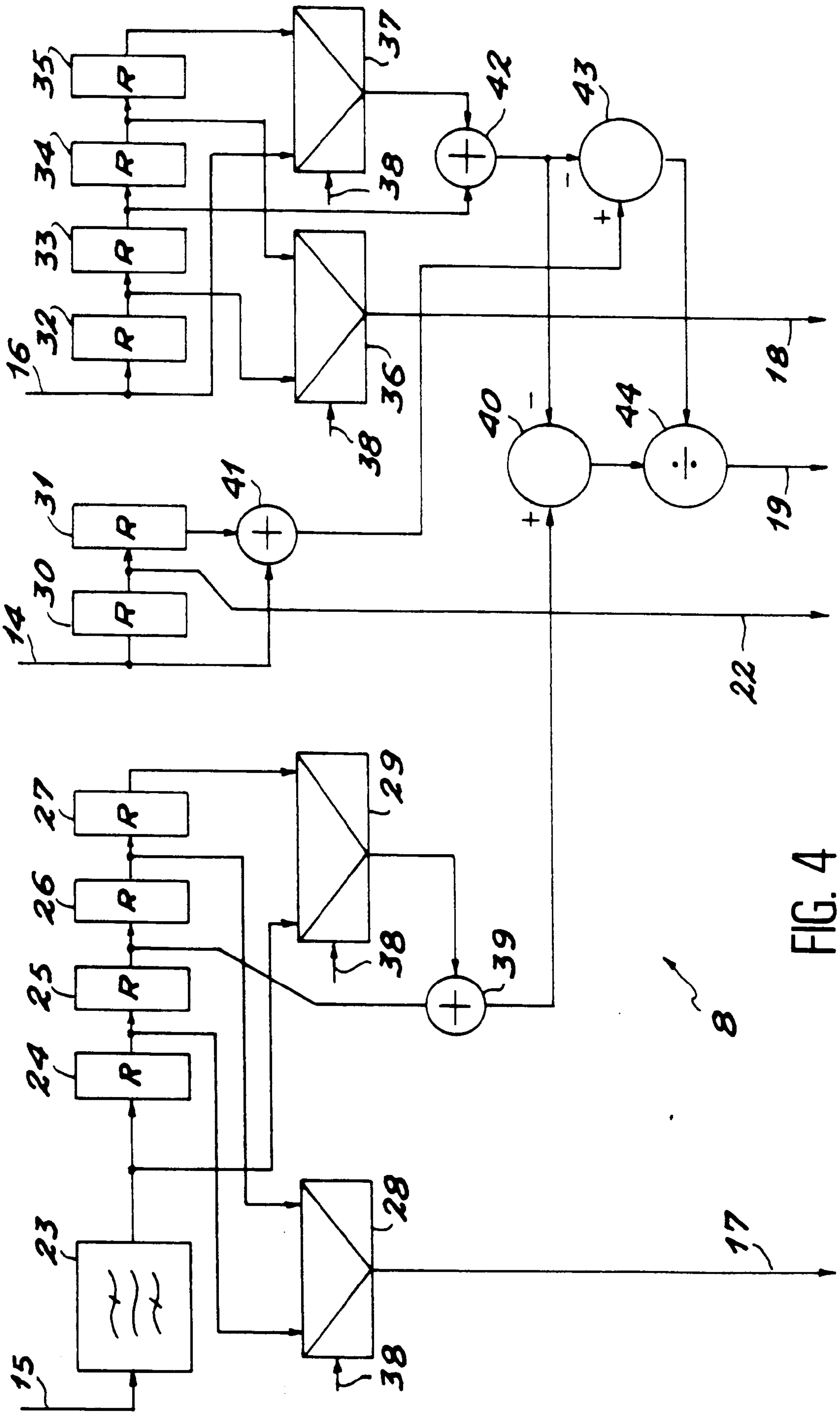

15
14
16
23
24
25
26
27
28
29
30
31
32
33
34
35
36
37
38
39
40
41
42
43
44
17
18
19
22
8
R
+
−
÷


FIG. 4

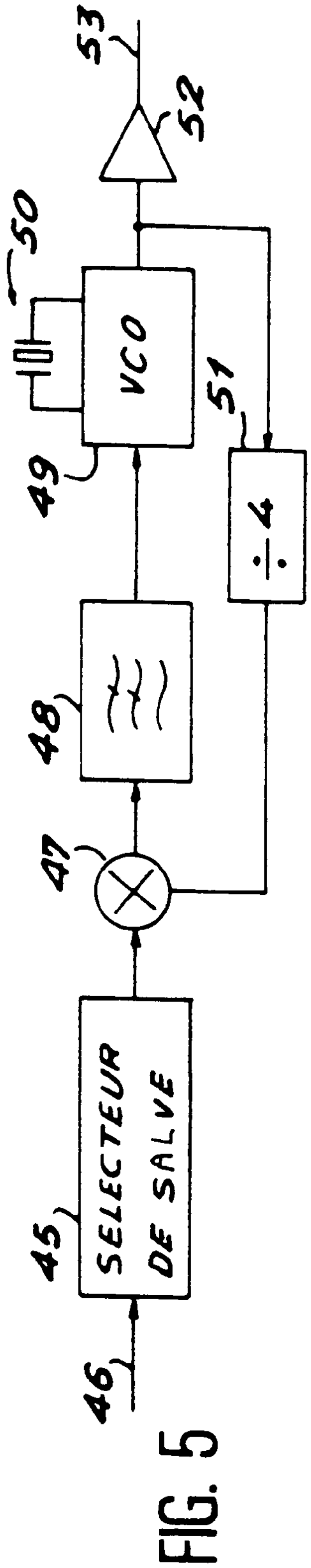
SELECTEUR DE SALVE
VCO
÷ 4
45
46
47
48
49
50
51
52
53

FIG. 5

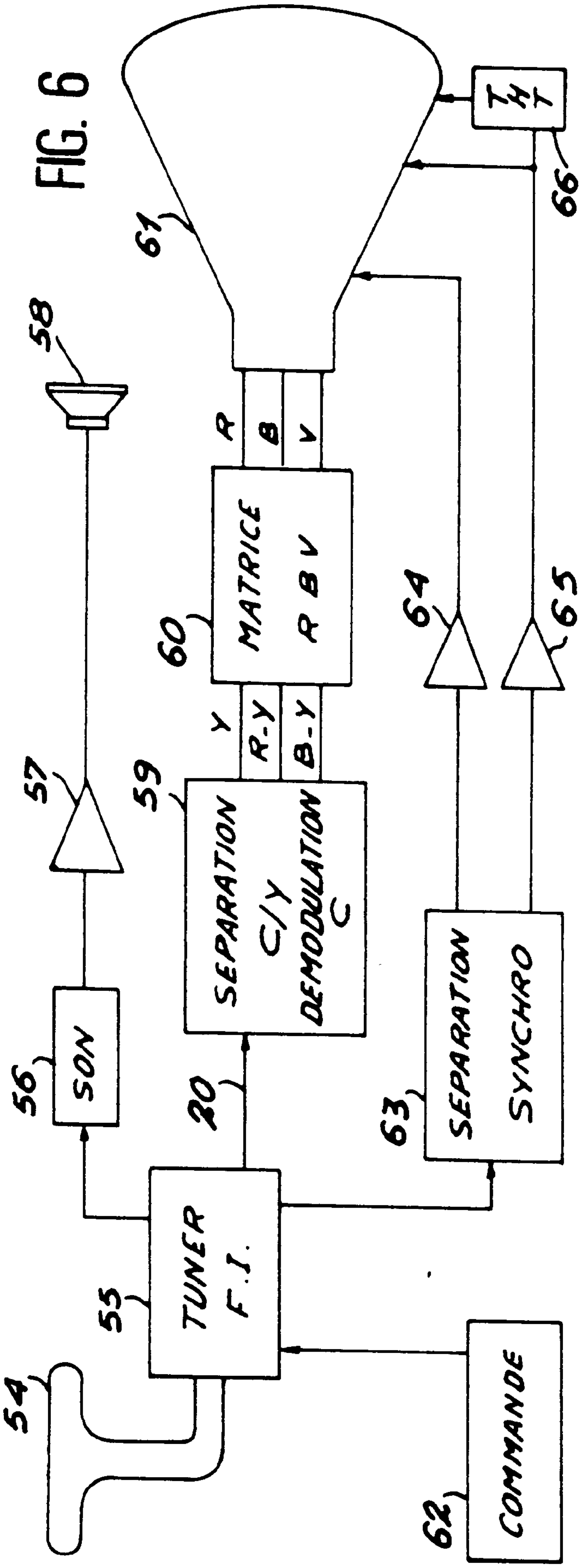
TUNER F.I.
SON
SEPARATION C/Y DEMODULATION C
MATRICE R B V
SEPARATION SYNCHRO
COMMANDE
T H T
Y
R-Y
B-Y
R
B
V
20
54
55
56
57
58
59
60
61
62
63
64
65
66

FIG. 6